**Europäisches Patentamt**

**European Patent Office**

**Office européen des brevets**

(11) Veröffentlichungsnummer: **0 237 638
B1**

(12) **EUROPÄISCHE PATENTSCHRIFT**

(45) Veröffentlichungstag der Patentschrift:
**04.10.89**

(21) Anmeldenummer: **86117365.6**

(22) Anmeldetag: **12.12.86**

(51) Int. Cl.⁴: **F16H 55/14, F16D 3/76**

(54) **Achsgetriebe.**

(30) Priorität: **18.03.86 DE 3609034**

(43) Veröffentlichungstag der Anmeldung:
**23.09.87 Patentblatt 87/39**

(45) Bekanntmachung des Hinweises auf die Patenterteilung:
**04.10.89 Patentblatt 89/40**

(84) Benannte Vertragsstaaten:
**AT BE CH DE ES FR GB GR IT LI NL SE**

(56) Entgegenhaltungen:
**AU-B- 526 555
DE-B- 2 138 134
DE-C- 896 741
FR-A- 743 344
FR-A- 1 497 542
US-A- 2 637 986**

(73) Patentinhaber: **MAN Nutzfahrzeuge Aktiengesellschaft,
Dachauer Strasse 667 Postfach 50 06 20,
D-8000 München 50(DE)**

(72) Erfinder: **Hagin, Faust, Poccistrasse 2,
D-8000 München 2(DE)**
Erfinder: **Seethaler, Franz, Pappelweg 2,
D-8047 Karlsfeld(DE)**
Erfinder: **Zelinka, Robert, Knospenstrasse 35,
D-8000 München 50(DE)**
Erfinder: **Stiglmaier, Manfred, Am Grübel 7a,
D-8031 Gilching(DE)**

## Beschreibung

Die Erfindung betrifft ein Achsgetriebe mit miteinander in Eingriff stehenden gedämpften Tellerrädern und Kegelrädern.

Achsgetriebe erzeugen einen erheblichen Geräuschpegel, dabei dominiert der Geräuschanteil, der durch den Eingriff von Tellerrad und Kegelrad entsteht. Das Tellerrad wirkt hier wie ein Klangkörper. Dämpfungsmaßnahmen von Zahnrädern sind nach der AU-B 48 660 179 bekannt.

Der Erfindung liegt die Aufgabe zugrunde, die Geräuschemission bei Achsgetrieben zu senken.

Dies wird erfindungsgemäß dadurch erreicht, daß die Tellerdämpfung aus einem fest mit dem Differentialgehäuse verbunden Zwischenstück und einer das Zwischenstück mit dem Tellerrand verbindenden elastischen Kupplung besteht und zwischen den Kontaktflächen von Tellerrad und Zwischenstück Ringnuten und/oder Ringspalte zur Aufnahme von Viskosematerial angeordnet sind. Solcherart wird Ausbreitung des Zahneingriffgeräusches wesentlich vermindert, wobei die vom Kegelrad auf das Tellerrad wirkenden Axial- und Radialschwingungen durch die Viskosesubstanz und das Zwischenstück, vorzugsweise in der Ausbildung als Sphärogußteil, erheblich gedämpft werden. Die Lärmpegelminderung am Achsgetriebe beeinflußt maßgeblich den Gesamtgeräuschpegel des Fahrzeuges.

Nach einem Merkmal der Erfindung besteht die elastische Kupplung aus zwei elastischen Ringen und einer die Ringe übergreifenden, diese fest vrebindende Außenhülse. Diese Ausbildungsform ist einfach und preiswert herzustellen. Ein weiterer Vorteil ist das mühelose Einbringen in den Innenraum des Differentialgehäuses, ohne Konturänderungen vornehmen zu müssen.

Nach einem anderen Merkmal der Erfindung ist das Tellerrad gleitbar auf dem parallel zur Tellerradachse verlaufenden Schenkel des Zwischenstückes angeordnet. Durch diese Maßnahme hat das Tellerrad zwei Freiheitsgrade, die von der elastischen Kupplung dämpfend genutzt werden können.

Die elastischen Ringe sind in ihrer Dicke so ausgelegt, daß eine zusätzliche, etwaige Kippmomente entgegenwirkende Anpreßkraft entsteht. Hierbei muss die Anpreßkraft ausreichend hoch sein, um die durch den Zahneingriff von Kegel- und Tellerrad entstehenden Kippmomente bzw. der Abhebekraft zwischen dem Zwischenstück und dem Tellerrad entgegen zu wirken.

Nach einem besonders wichtigem Merkmal der Erfindung ist zwischen den Radialflächen des parallel zur Telleradachse verlaufenden Schenkels des Zwischenstückes und der Radialfläche des Flansches des Tellerrades ein Spalt zur Aufnahme von Viskosematerial angeordnet. Diese Maßnahme, die sehr einfach und kostenneutral ist, unterstützt die vorgenannten dämpfenden Effekte wesentlich, indem die Wirkung des Wälzens mit radialem Kontakt Metall auf Metall durch einen Viskosefilm aufgehoben wird. In diesem Sinne wirkt auch das aus Sphäroguß hergestellte Zwischenstück, wobei die bekannt dämpfenden Eigenschaften dieses Material genutzt werden.

Weitere Vorteile und Merkmale der Erfindung sind den Ansprüchen, der Beschreibung und der Zeichnung zu entnehmen.

Die Erfindung wird in einem Ausführungsbeispiel dargestellt.

Es zeigt:

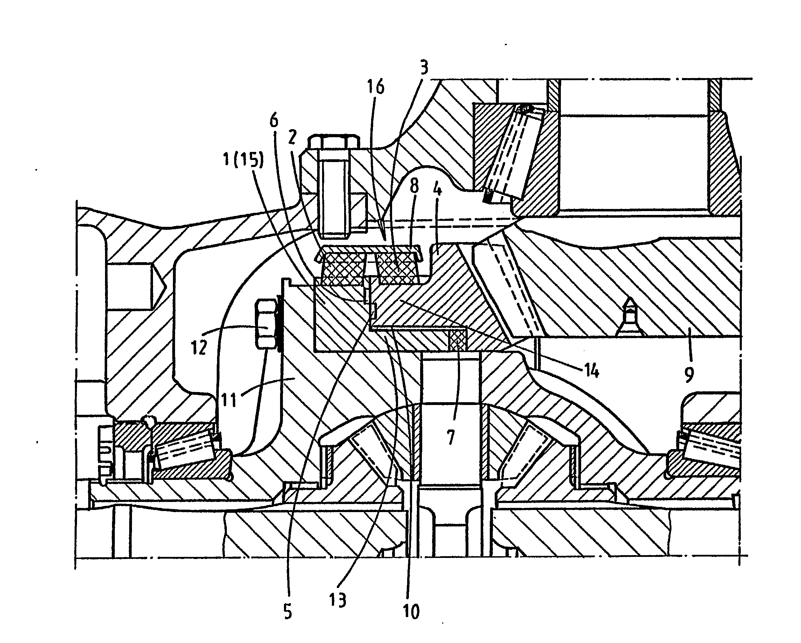

Fig. 1 einen Ausschnitt eines Achsgetriebes im Schnitt.

Am Differentialgehäuse (11) ist das vorzugsweise aus Sphäroguß hergestellte Zwischenstück (1) mittels Schrauben (12) befestigt. Auf dem horizontalen Schenkel (13) des Zwischenstückes ist das Tellerrad (4), das mit dem Kegelrad (9) in Eingriff steht, gleitbar gelagert. Mit seiner Stirnwand kommt es zur Anlage an die Stirnwand des Zwischenstückes. Die radialen Flächen von Zwischenstück (1) und Flansch (14) des Tellerrades (4) sind axial genutet, um die elastischen Ringe (2, 3) formschlüssig und durch zusätzliche Vulkanisierung auf kraftschlüssig aufzunehmen. Über Außenhülse (8) sind die beiden Ringe (2 und 3) miteinander formschlüssig, z. B. durch axiale Sicken und kraftschlüssig durch vulkanisieren verbunden. Auf den Stirnseiten des vertikalen Schenkels (15) des Zwischenstückes (1) und des Flansches (14) sind Ringnuten (5, 6) angeordnet, die zur Aufnahme von Viskosesubstanz dienen. Zwischen den Umfangsflächen des parallel zur Tellerradachse verlaufenden Schenkels (13) des Zwischenstückes und des Flansches (14) des Tellerrades ist ein Spalt (10) vorgesehen, der mit Viskosematerial gefüllt ist. Eine zwischen dem Ende des Schenkels (13) und einem Absatz des Tellerrades (4) angeordnete Dichtung (1) verhindert das Austreten von Viskosesubstanz.

## Patentansprüche

1. Achsgetriebe mit miteinander in Eingriff stehenden gedämpften Tellerrädern und Kegelrädern, dadurch gekennzeichnet, daß die Tellerraddämpfung aus einem fest mit dem Differentialgehäuse (11) verbundenen Zwischenstück (1) und einer das Zwischenstück mit dem Tellerrad (4) verbindenden elastischen Kupplung (16) besteht und zwischen den Kontaktflächen von Tellerrad (4) und Zwischenstück (1) Ringnuten (5, 6) und/oder Ringspalte zur Aufnahme von Viskosesubstanz angeordnet sind.

2. Achsgetriebe nach Anspruch 1, dadurch gekennzeichnet, die elastische Kupplung (16) aus zwei elastischen Ringen (2, 3) und einer die Ringe übergreifenden, diese fest verbindenden Außenhülse (8) besteht.

3. Achsgetriebe nach den Ansprüchen 1 oder 2, dadurch gekennzeichnet, daß das Tellerrad (4) gleitbar auf dem parallel zur Tellerradachse verlaufenden Schenkel (13) des Zwischenstückes (1) angeordnet ist.

4. Achsgetriebe nach den Ansprüchen 1 bis 3, dadurch gekennzeichnet, daß die elastischen Ringe (2, 3) außen formschlüssig mit der Außenhülse (8) und innen formschlüssig mit dem vertikal zur Tellerradachse verlaufenden Schenkel (15) des Zwischenstückes (1) und dem Flansch (14) des Tellerrades (4) verbunden sind.

5. Achsgetriebe nach einem oder mehreren der Ansprüche 1 bis 4, dadurch gekennzeichnet, daß die Teile (1, 2, 3, 4 und 8) an ihren Kontaktflächen miteinander vulkanisiert sind.

6. Achsgetriebe nach einem oder mehreren der Ansprüche 1 bis 5, dadurch gekennzeichnet, daß die elastischen Ringe (2, 3) in ihrer Dicke derart ausgelegt sind, daß eine zusätzliche, etwaige Kippmomente entgegenwirkende Anpreßkraft entsteht.

7. Achsgetriebe nach einem oder mehreren der Ansprüche 1 bis 6, dadurch gekennzeichnet, daß zwischen den Radialflächen des parallel zur Tellerradachse verlaufenden Schenkels (13) des Zwischenstückes (1) und der Radialfläche des Flansches (14) des Tellerrades (4) ein Spalt (10) zur Aufnahme von Viskosematerial angeordnet ist.

8. Achsgetriebe nach einem oder mehreren der Ansprüche 1 bis 7, dadurch gekennzeichnet, daß zwischen dem parallel zur Tellerradachse verlaufenden Schenkel (13) des Zwischenstückes (1) und einem Absatz des Tellerrades (4) eine Dichtung (7) angeordnet ist.

9. Achsgetriebe nach einem oder mehreren der Ansprüche 1 bis 8, dadurch gekennzeichnet, daß die elastischen Ringe (2, 3) aus Gummi sind.

10. Achsgetriebe nach einem oder mehreren der Ansprüche 1 bis 9, dadurch gekennzeichnet, daß das Zwischenstück (1) aus Sphäroguß ist.

11. Achsgetriebe nach einem oder mehreren der Ansprüche 1 bis 10, dadurch gekennzeichnet, daß die Außenhülse (8) aus Stahl ist.

**Revendications**

1. Transmission d'essieu comportant des couronnes et des roues coniques en prise amortie, caractérisée en ce que le moyen d'amortissement de la couronne se compose d'une pièce intermédiaire reliée solidairement au carter (11) du différentiel et d'un accouplement élastique (16) reliant la pièce intermédiaire et la couronne (16) et entre les surfaces de contact de la couronne (4) et de la pièce intermédiaire (1) on a des rainures annulaires (5, 6) et/ou des intervalles annulaires pour recevoir une matière visqueuse.

2. Transmission d'essieu selon la revendication 1, caractérisée en ce que l'accouplement élastique (16) se compose de deux bagues élastiques (2, 3) et d'un manchon extérieur (8) qui entoure ces deux bagues et les relie solidairement.

3. Transmission d'essieu selon les revendications 1 ou 2, caractérisée en ce que la couronne (4) glisse sur la branche (13) parallèle à l'axe de la couronne sur la pièce intermédiaire (1).

4. Transmission d'essieu selon l'une des revendications 1 à 3, caractérisée en ce que les bagues élastiques (2, 3) sont reliées extérieurement par une liaison par la forme au manchon extérieur (8) et intérieurement par une liaison par la forme à la branche (15) verticale par rapport à l'axe de la couronne sur la pièce intermédiaire (1) et la bride (14) de la couronne (4).

5. Transmission d'essieu selon une ou plusieurs revendications 1 à 4, caractérisée en ce que les pièces (1, 2, 3, 4 et 8) sont vulcanisées les unes aux autres au niveau de leur surface de contact.

6. Transmission d'essieu selon l'une ou plusieurs des revendioations 1 à 5, caractérisée en ce que les bagues élastiques (2) ont une épaisseur créant une fore d'application complémentaire s'opposant à tout moment de basculement.

7. Transmission d'essieu selon l'une ou plusieurs des revendications 1 à 6, caractérisée en ce qu'entre les surfaces radiales de la branche (13) parallèle à l'axe de la couronne sur la pièce intermédiaire (1) et la surface radiale de la bride (14) de la couronne (4) il y a un intervalle (10) pour recevoir la matière visqueuse.

8. Transmission d'essieu selon une ou plusieurs revendications 1 à 7, caractérisée en ce qu'entre la branche (13) parallèle à l'axe de la couronne sur la pièce intermédiaire (1) et un épaulement de la couronne (4) il est prévu un joint (7).

9. Transmission d'essieu selon l'une ou plusieurs des revendications 1 à 8, caractérisée en ce que les bagues élastiques (2, 3) sont en caoutchouc.

10. Transmission d'essieu selon l'une ou plusieurs des revendications 1 à 9, caractérisée en ce que la pièce intermédiaire est en fonte nodulaire.

11. Transmission d'essieu selon une ou plusieurs des revendications 1 à 10, caractérisée en ce que le manchon extérieur (8) est en acier.

**Claims**

1. An axle drive with damped, interengaged crown wheels and bevel wheels, characterised in that the crown wheel damping arrangement comprises an intermediate member (1) fixedly connected to the differential housing (11) and a resilient coupling (16) connecting the intermediate member with the crown wheel (4) and in that annular grooves (5, 6) and/or annular slits for accommodating viscose substance are arranged between the contact surfaces of the crown wheel (4) and the intermediate member (1).

2. An axle drive according to Claim 1, characterised in that the resilient coupling (16) comprises two resilient rings (2, 3) and an outer sleeve (8) extending over the rings and connecting them firmly.

3. An axle drive according to Claims 1 or 2, characterised in that the crown wheel (4) is slidably arranged on the arm (13) of the intermediate member (1), which arm extends parallel to the crown wheel axis.

4. An axle drive according to Claims 1 to 3, characterised in that the resilient rings (2, 3) are on the outside positively connected with the outer sleeve (8) and on the inside positively connected with the arm (15) of the intermediate member (1), which arm extends vertically to the crown wheel axis, and with the flange (14) of the crown wheel (4).

5. An axle drive according to one or more of Claims 1 to 4, characterised in that the parts (1, 2, 3, 4 and 8) are vulcanised together at their contact surfaces.

6. An axle drive according to one or more of Claims 1 to 5, characterised in that the thickness of the resilient rings (2, 3) is such that an additional bearing force is produced which counteracts any tilting moments.

7. An axle drive according to one or more of Claims 1 to 6, characterised in that a slit (10) for accommodating viscose material is arranged between the radial surfaces of the arm (13) of the intermediate member (1), which arm extends parallel to the crown wheel axis, and the radial surface of the flange (14) of the crown wheel (4).

8. An axle drive according to one or more of Claims 1 to 7, characterised in that a packing (7) is arranged between the arm (13) of the intermediate member (1), which arm extends parallel to the crown wheel axis, and a shoulder of the crown wheel (4).

9. An axle drive according to one or more of Claims 1 to 8, characterised in that the resilient rings (2, 3) are made of rubber.

10. An axle drive according to one or more of Claims 1 to 9, characterised in that the intermediate member (1) is made of spheroidal graphite cast iron.

11. An axle drive according to one or more of Claims 1 to 10, characterised in that the outer sleeve (8) is made of steel.